# EUROPÄISCHE PATENTSCHRIFT

(11) **EP 1 193 094 B1**
(45) Veröffentlichungstag und Bekanntmachung des Hinweises auf die Patenterteilung: **12.04.2006**
(21) Anmeldenummer: 01121720.5
(22) Anmeldetag: 18.09.2001
(51) Int. Cl.: B60J 7/22

(54) **Mechanik für einen Windabweiser eines öffnungsfähigen Fahrzeugdachs**
Device for open roof wind deflector
Mécanisme pour déflecteur de vent de toit ouvrant

(30) Priorität: 27.09.2000 DE 10048983
(43) Veröffentlichungstag der Anmeldung: 03.04.2002
(73) Patentinhaber: Webasto Vehicle Systems International GmbH, 82131 Stockdorf (DE)
(72) Erfinder: Kohout, Erwin, 81375 München (DE); Dittrich, Wolfgang, 82205 Gilching (DE); Radmanic, Stjepan, 82291 Mammendorf (DE)
(74) Vertreter: Wiese, Gerhard

(56) Entgegenhaltungen:
- EP-A- 0 734 894
- DE-A- 2 416 173
- DE-A- 3 039 769
- DE-A- 3 425 271
- DE-A- 3 823 316
- DE-B- 1 149 627
- DE-C- 19 713 360

## Beschreibung

Die Erfindung betrifft eine Mechanik für einen Windabweiser eines öffnungsfähigen Fahrzeugdachs gemäß dem Oberbegriff des Patentanspruchs 1.

Aus der gattungsgemäßen DE 11 49 627 B ist eine derartige Mechanik bekannt. Bei dieser ist der Ausstellhebel nach Art eines Federbeins mit seinem hinteren Ende in einem Hohlzylinder gelagert und wird von einer auf das rückwärtige Ende des Ausstellhebels einwirkenden Druckfeder in Ausstellrichtung beaufschlagt. Der Ausstellhebel und der mitschwenkende Hohlzylinder weisen gemeinsam eine große Baulänge auf, die ein Ausstellen des Windabweisers erst bei einer relativ großen Teilöffnung des Deckels ermöglicht. Auch der Durchmesser der Einheit aus Schwenkhebel und Hohlzylinder ist größer, so daß mehr Bauraum in diesem Bereich beansprucht wird.

Aus der EP 0 955 194 A1 ist eine weitere Mechanik bekannt, bei der ein Ausstellhebel von einem in Schließposition des Windabweisers im wesentlichen horizontal angeordneten Federelement mittels einer vom Federelement verschiebbaren Schlitten-/Kulissenanordnung ausgestellt wird. Da bei dieser bekannten Anordnung neben der Schlittenanordnung zusätzlich eine Führung für den Schlitten sowie eine stationäre Führungskulisse notwendig sind, ist diese im Aufbau relativ kompliziert und erfordert aufgrund der Vielzahl von Bauteilen auch einen erhöhten Bauraum.

Eine aus der DE 34 25 271 A1 bekannte Mechanik zur Betätigung eines Windabweisers sieht eine vor einem Gleitelement eines Ausstellhebels horizontal angeordnete Feder vor. Das oberer Ende des Ausstellhebels greift mit einem Bolzen in eine am Windabweiser befestigte Kulisse ein. Auch diese Mechanik weist einen relativ großen Bauraumbedarf auf.

Der Erfindung liegt die Aufgabe zugrunde, eine Mechanik für einen Windabweiser zu schaffen, die einen einfachen Aufbau und einen verringerten Bauraumbedarf insbesondere für den Ausstellhebel aufweist.

Diese Aufgabe wird durch die Merkmale des Patentanspruchs 1 gelöst. Vorteilhafte Ausgestaltungen der Erfindung sind den Unteransprüchen zu entnehmen.

Die vorliegende Erfindung sieht bei einer Mechanik mit einer Ausgleichs-Vorrichtung, die zwischen Windabweiser und Ausstellhebel zum Ausgleich der Bewegung der Hinterkante des Windabweisers in Längsrichtung bei der Schwenkbewegung vorgesehen ist, und die unmittelbar von der Feder gebildet wird, im Kern vor, daß die Feder über eine dachfest verschiebbar gelagerte Schubstange auf den Ausstellhebel einwirkt und somit von der Schwenkbewegung desselben unabhängig gelagert ist. Da der Bauraum bei einem öffnungsfähigen Fahrzeugdach bei einer in der Regel nach hinten leicht ansteigenden Fahrzeug-Dachkontur bezüglich der Bauhöhe vorn am stärksten beschränkt ist, ist diese Anordnung, bei der die Feder weiter hinten angeordnet ist, besonders vorteilhaft.

Da der Ausstellhebel in Schließposition bevorzugt eine gestreckte Lage einnimmt, ist vorteilhaft zusätzlich vorgesehen, daß zu Beginn der Ausstellbewegung eine zweite Feder als Kick-Feder von unten auf den Ausstellhebel einwirkt, um diesen aus der gesteckten Lage nach oben zu bewegen.

Bevorzugt ist vorgesehen, daß der Ausstellhebel für das Zurückschwenken des Windabweisers in die Schließposition durch einen horizontal verschiebbaren Deckel niedergedrückt wird.

Eine vorteilhafte Ausgestaltung der erfindungsgemäßen Mechanik besteht darin, daß diese auf eine Windabweiser-Lamelle wirkt, die in geschlossener Position bündig mit einem dahinter angeordneten Deckel angeordnet ist.

Nachfolgend sind Ausführungsbeispiele der Erfindung anhand der Zeichnung beschrieben. Es zeigt:
- Figur 1: eine schematische perspektivische Teilansicht eines Fahrzeugdachs, und
- Figur 2: eine Windabweiser-Mechanik in einer schematischen Seitenansicht.

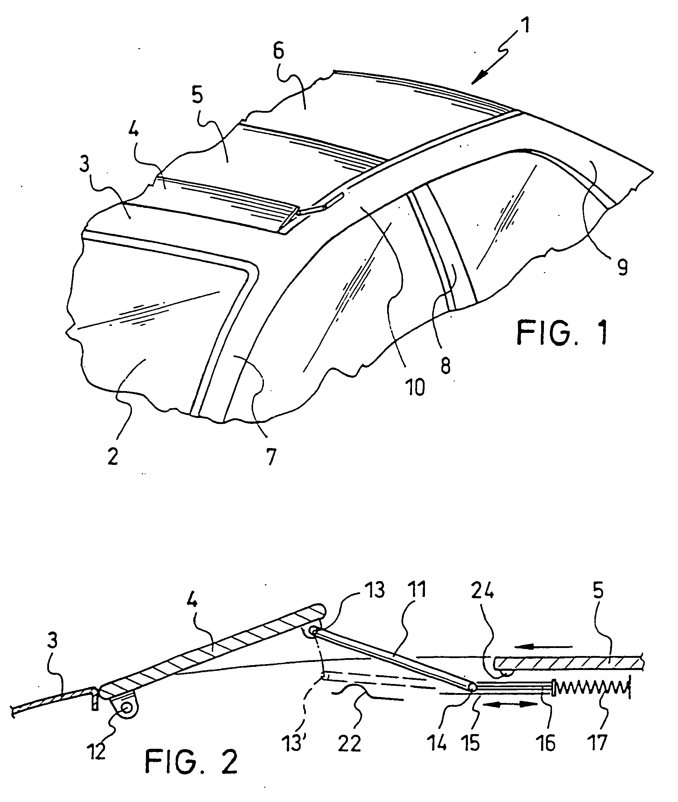

In Figur 1 ist ein festes Fahrzeugdach 1 gezeigt, bei dem sich an eine Frontscheibe 2 ein Windlauf 3, ein als Wndabweiser-Lamelle ausgebildeter Windabweiser 4, ein hinter diesem angeordneter verschiebbarer Deckel 5 und eine dahinter liegende feste Dachscheibe 6 anschließt.

Das Fahrzeugdach 1 wird seitlich begrenzt von Seitenholmen 10, welche mit den A-Säulen 7, den B-Säulen 8 und den C-Säulen 9 verbunden sind. Der Deckel 5 ist mit seiner Hinterkante nach oben ausstellbar und längs seitlicher Führungen (nicht dargestellt) nach hinten über die feste Dachscheibe 6 verschiebbar.

Der Windabweiser 4 ist nahe seiner Vorderkante mittels einer Schwenklagerung 12 schwenkbar am festen Fahrzeugdach 1 bzw. am Windlauf 3 gelagert. Nahe seiner Hinterkante ist am Windabweiser 4 im Ausführungsbeispiel gemäß Figur 2 ein Ausstellhebel 11 mittels einer Anlenkung 13 gelagert. Das hintere Ende des Ausstellhebel 11 ist mittels einer unteren Anlenkung 14 mit einer Schubstange 16 verbunden, deren hinteres Ende an einer Feder 17 befestigt ist, die im wesentlichen horizontal am festen Fahrzeugdach 1 bzw. an einem seitlich des Deckels 5 angeordneten nicht dargestellten Dachrahmen gelagert ist.

Wenn sich der Windabweiser 4 in seiner Schließposition befindet, liegt sein hinteres Ende bündig an der Vorderkante des geschlossenen Deckels 5 an. Der Ausstellhebel 11 nimmt dabei annähernd eine gestreckte, horizontale Lage ein. Die in einer dachfesten Führung 15 geführte Schubstange 16 drückt dabei mit ihrem hinteren Ende die Feder 17 zusammen. Da die Kraft der Feder 17 bei gestreckter Lage des Ausstellhebels 11 diesen nicht auszustellen vermag, ist zusätzlich eine Kick-Feder 22 vorgesehen, die auf die Unterseite des Ausstellhebels 11 wirkt und diesen bei Beginn einer Ausstellbewegung in eine leicht nach oben abgewinkelte Position bringt, so wie dies in Figur 2 in gestrichenen Linien dargestellt ist. Auf die Kick-Feder 22 kann verzichtet werden, wenn der Ausstellhebel 11 in der Schließposition keine gestreckte, sondern eine leicht nach oben abgewinkelte Position einnimmt.

Obwohl die Feder 17 in den schematischen Zeichnungen als spiralförmige Druckfedern dargestellt sind, versteht sich für den Fachmann, daß diese auch in anderer Weise realisiert werden können. Beispielsweise können Gasdruckfedern vorgesehen sein. Als Kick-Feder 22 ist neben der schematisch dargestellten Ausführungsform als gebogene Blattfeder auch jeder andere Form von Federn geeignet, die einen Druck auf den Ausstellhebel 11 ausübt und diesem eine kleine Bewegung nach oben aufzwingt. Beispielsweise ist hierfür eine Gummifeder geeignet.

### Bezugszeichenliste

- 1: Fahrzeugdach
- 2: Frontscheibe
- 3: Windlauf
- 4: Windabweiser(-Lamelle)
- 5: Deckel
- 6: Dachscheibe
- 7: A-Säule
- 8: B-Säule
- 9: C-Säule
- 10: Seitenholm
- 11: Ausstellhebel
- 12: Schwenklagerung
- 13: Anlenkung (von 11 an 4)
- 14: (untere) Anlenkung (von 11)
- 15: Führung
- 16: Schubstange
- 17: Feder
- 22: Kick-Feder
- 24: Anlauf-Nocken

## Patentansprüche

1. Mechanik für einen Windabweiser (4) eines Fahrzeugdachs mit einem Ausstellhebel (11), der mittels einer Feder (17) in Ausstellrichtung beaufschlagt ist, wobei die Verlagerung der Hinterkante des Windabweisers (4) in Längsrichtung während der Schwenkbewegung mittels der als Ausgleichs-Vorrichtung dienenden Feder (17) ausgeglichen wird, die von hinten nach vorn auf das hintere Ende des Ausstellhebels (11) wirkt, wobei der Ausstellhebel (11) in der Schließposition des Windabweisers (4) eine annähernd gestreckte, horizontale Position einnimmt, **dadurch gekennzeichnet, daß** die Feder (17) über eine Schubstange (16) mit dem hinteren Ende des Ausstellhebels (11) verbunden ist, und die Schubstange (16) in einer dachfesten Führung (15) geführt ist.

2. Mechanik nach Anspruch 1, **dadurch gekennzeichnet, daß** der Ausstellhebel (11) für das Zurückschwenken des Windabweisers (4) durch einen Deckel (5), der horizontal verschiebbar ist, nieder gedrückt wird.

3. Mechanik nach einem der vorhergehenden Ansprüche, **dadurch gekennzeichnet, daß** der Ausstellhebel (11) zu Beginn der Ausstellbewegung von einer weiteren Feder (22) nach oben bewegt wird.

4. Mechanik nach einem der vorhergehenden Ansprüche, **dadurch gekennzeichnet, daß** der Windabweiser (4) von einer Windabweiser-Lamelle gebildet wird, die in geschlossener Position bündig mit einem dahinter angeordneten Deckel (5) angeordnet ist.

## Claims

1. Mechanism for a wind deflector (4) of a vehicle roof, having an opening lever (11) which is loaded in the opening direction by means of a spring (17), the displacement of the rear edge of the wind deflector (4) in the longitudinal direction during the pivoting movement being compensated for by means of the spring (17) acting as a compensation device which acts forwards from the rear on the rear end of the opening lever (11), the opening lever (11) assuming an approximately extended, horizontal position in the closed position of the wind deflector (4), **characterized in that** the spring (17) is connected to the rear end of the opening lever (11) via a push rod (16), and the push rod (16) is guided in a guide (15) fixed to the roof.

2. Mechanism according to Claim 1, **characterized in that** the opening lever (11) is pressed down by a panel (5) which can be displaced horizontally in order to pivot the wind deflector (4) back.

3. Mechanism according to one of the preceding claims, **characterized in that** the opening lever (11) is moved upwards by a further spring (22) at the start of the opening movement.

4. Mechanism according to one of the preceding claims, **characterized in that** the wind deflector (4) is formed by a wind deflector slat which, in the closed position, is arranged flush with a panel (5) arranged behind it.

## Revendications

1. Mécanisme pour un déflecteur de vent (4) d'un toit de véhicule, comprenant un levier de projection ou de déploiement (11) qui est sollicité dans le sens de projection ou de déploiement au moyen d'un ressort (17), le déplacement de l'arête arrière du déflecteur de vent (4) dans la direction longitudinale pendant le mouvement de pivotement étant compensé au moyen du ressort (17) faisant office de dispositif compensateur qui agit de l'arrière vers l'avant sur l'extrémité arrière du levier de projection ou de déploiement (11), ledit levier de projection ou de déploiement (11) se mettant dans une position approximativement horizontale et allongée lorsque le déflecteur de vent (4) est en position fermée, **caractérisé en ce que** le ressort (17) est relié à l'extrémité arrière du levier de projection ou de déploiement (11) par le biais d'une tige de poussée (16), et **en ce que** la tige de poussée (16) est guidée dans une glissière (15) solidaire du toit.

2. Mécanisme selon la revendication 1, **caractérisé en ce que** le levier de projection ou de déploiement (11) est poussé vers le bas par un panneau d'obturation ou couvercle (5) pouvant coulisser horizontalement pour ramener le déflecteur de vent (4) dans la position initiale.

3. Mécanisme selon l'une des revendications précédentes, **caractérisé en ce qu'**au début du mouvement de projection ou de déploiement, le levier de projection ou de déploiement (11) est déplacé vers le haut par un ressort supplémentaire (22).

4. Mécanisme selon l'une des revendications précédentes, **caractérisé en ce que** le déflecteur de vent (4) est formé par une lamelle de déflecteur de vent qui, en position fermée, est disposée en affleurement avec un panneau d'obturation (5) situé derrière elle.
